(19) Europäisches Patentamt
European Patent Office
Office européen des brevets

(11) **EP 3 859 658 B1**

(12) **EUROPÄISCHE PATENTSCHRIFT**

(45) Veröffentlichungstag und Bekanntmachung des Hinweises auf die Patenterteilung:
**16.07.2025   Patentblatt 2025/29**

(21) Anmeldenummer: **20154523.3**

(22) Anmeldetag: **30.01.2020**

(51) Internationale Patentklassifikation (IPC):
***G06T 5/73*** *(2024.01)*

(52) Gemeinsame Patentklassifikation (CPC):
**G06T 5/73**

(54) **BILDBEARBEITUNG ZUR VERBESSERUNG DER SCHÄRFENTIEFE INSBESONDERE BEI OBJEKTVERMESSUNGEN**

IMAGE PROCESSING FOR IMPROVING DEPTH OF FIELD, PARTICULARLY FOR OBJECT MEASUREMENT

TRAITEMENT D'IMAGES PERMETTANT D'AMÉLIORER LA PROFONDEUR DE CHAMPS, EN PARTICULIER POUR DES MESURES D'OBJET

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**04.08.2021   Patentblatt 2021/31**

(73) Patentinhaber: **Carl Zeiss Industrielle Messtechnik GmbH**
**73447 Oberkochen (DE)**

(72) Erfinder: **Göhnermeier, Aksel**
**1939 Zaventerm (BE)**

(74) Vertreter: **Patentanwälte Bressel und Partner mbB**
**Potsdamer Platz 10**
**10785 Berlin (DE)**

(56) Entgegenhaltungen:
- LU ET AL.: "Imaging properties of extended depth of field microscopy through single-shot focus scanning", OPTICS EXPRESS, vol. 23, no. 8, 16 April 2015 (2015-04-16), pages 10714 - 10731, XP002799751
- GUOAN ZHENG ET AL: "Wide-field, high-resolution Fourier ptychographic microscopy", NATURE PHOTONICS, vol. 7, no. 9, 28 July 2013 (2013-07-28), pages 739 - 745, XP055181687, ISSN: 1749-4885, DOI: 10.1038/nphoton.2013.187

**Beschreibung**

Die Erfindung betrifft ein Verfahren, eine Verwendung und eine Bilderfassungsanordnung, mit der die Tiefenschärfe bei Bildaufnahmen verbessert werden kann. Insbesondere betrifft die Erfindung eine computerimplementierte Lösung zum Bearbeiten digitaler Bilddateien und genauer gesagt zum Verbessern von deren Tiefenschärfe. Die Erfindung richtet sich insbesondere auf das Gebiet der Objektvermessung, für das Bilder mit höherer Schärfentiefe verbesserte Messergebnisse liefern können, beispielsweise bei einer optischen Koordinatenvermessung von Objekten und insbesondere von industriell gefertigten Werkstücken.

Es ist bekannt, dass mittels einer Bilderfassungseinrichtung (wie z.B. einer Kamera und insbesondere einer digitalen Kamera) erfasste Bilder eine physikalisch bedingt begrenzte Schärfentiefe aufweisen. Ursächlich hierfür sind feststehende Eigenschaften von Objektiven (insbesondere Brennweiten) oder von Belichtungseinstellungen (insbesondere einer Blendenöffnung) der Bilderfassungseinrichtung während einer Bildaufnahme. Allgemein kann unter der Schärfentiefe derjenige Bereich des Objektraums verstanden werden, der in einem erfassten Bild hinlänglich scharf abgebildet wird (der z.B. eine gewünschte Mindestanzahl von Linienpaaren pro Millimeter mit einem gewünschten Mindestkontrast abbildet).

Für Objektvermessungen besteht oftmals das Bedürfnis, eine hohe Schärfentiefe zu erzielen, um z.B. größere Bereiche eines Objekts (insbesondere entlang einer optischen Achse und/oder orthogonal zur Objektoberfläche) genauer abbilden und vermessen zu können. Hierfür existieren Möglichkeiten zur Bildbearbeitung, bei der sogenannte EDOF (Enhanced Depth of Field)-Bilder erzeugt werden. Genauer gesagt werden in diesem Fall eine Mehrzahl einzelner Bilder mit einer unterschiedlichen Fokuseinstellung aufgenommen und zu einem zusammengesetzten Bild zusammengefasst, wobei die Schärfentiefe des zusammengesetzten Bildes größer als diejenige eines jeweiligen Einzelbildes ist. Die Schärfentiefe kann dann auch größer als die mit einer Bilderfassungseinrichtung theoretisch mögliche bzw. physikalisch erzielbare Schärfentiefe bei einer Einzelaufnahme sein.

Aufgrund des Erfordernisses, eine Mehrzahl von Einzelbildern aufzunehmen, und diese dann auch zum Erzeugen des zusammengesetzten Bildes auszuwerten und/oder miteinander zu verrechnen, erfordert das Erzeugen von EDOF-Bildern einen vergleichsweise hohen Zeit- und Rechenaufwand. Beispielsweise erfordert die Bilderfassung, Abspeicherung und Auswertung einer Vielzahl von Einzelbildern eine gewisse Zeit und insbesondere auch eine gewisse Rechenkapazität und Rechendauer einer Computereinrichtung, mit der das EDOF-Bild erzeugt werden soll. Dies ist nachteilig z.B. hinsichtlich der erforderlichen Investitionskosten für eine geeignete Computereinrichtung bzw. Rechnerarchitektur. Auch kann die erforderliche Bilderfassungs- und Auswertungszeitdauer bei industriellen Anwendungen und insbesondere zur Objekt- bzw. Werkstückvermessung innerhalb von Produktionslinien unerwünscht sein.

Es existiert auch ein zu EDOF-Bildern alternativer Ansatz zur Erhöhung der Schärfentiefe durch Erfassen von hierin als Fokusscanbildern bezeichneten Bildern. Fokusscanbilder werden im Stand der Technik auch als "Single-Shot Focus Scanning"- Bilder bezeichnet (SSFS-Bilder). In diesem Fall wird während der Bildaufnahme (also während einer andauernden unterbrechungsfreien Belichtung) eine Fokuseinstellung der Bilderfassungseinrichtung variiert, insbesondere die Brennweite bzw. der objektseitige Arbeitsabstand. Es existieren Bearbeitungsalgorithmen, um anhand eines solchen Fokusscanbildes dann ebenfalls Bilder mit einer erhöhten Schärfentiefe zu erzeugen. Auch wenn diese im Stand der Technik aufgrund der erhöhten Schärfentiefe teilweise ebenfalls als EDOF-Bilder bezeichnet werden, unterscheidet sich das Vorgehen zur Bilderfassung von den klassischen EDOF-Ansätzen: Nicht eine Mehrzahl von Einzelbildern wird erfasst und ausgewertet, sondern es erfolgt eine einzelne Bildaufnahme zur Erzeugung einer einzelnen Bilddatei, bei der jedoch die Fokuseinstellung variiert wird (d.h. die Fokusebene während der laufenden Belichtung und Bilderfassung über einen Scanbereich oder auch eine Scantiefe variiert wird).

Hintergründe zu derartigen Bilderfassungen finden sich im folgenden wissenschaftlichen Artikel: "Imaging properties of extended depth of field microscopy through single-shot focus scanning", Lu et al., OPTICS EXPRESS 10731, 20. April 2015, doi: 10.1364/OE.23.010714.

Im obigen Artikel werden auch Ansätze zur Bildbearbeitung erläutert, wie aus einem SSFS-Bild, das aufgrund der Variation der Fokuseinstellung zunächst unscharf ist und sich durch einen geringen Kontrast auszeichnet, ein schärferes Bild mit erhöhter Schärfentiefe (also ein EDOF-Bild) berechnet werden kann.

Auch wenn durch Aufnahme von SSFS-Bildern die Anzahl zu erfassender und auszuwertender Bilder gegenüber klassischen EDOF-Ansätzen reduziert werden kann, ist es mit bisherigen Ansätzen zur anschließenden Auswertung bzw. Umrechnung der zunächst unscharfen und kontrastarmen SSFS-Bildern nicht immer möglich, eine erforderliche Rechenzeit sowie Rechenkapazität in einem gewünschten Ausmaß zu reduzieren. Auch in dem obigen Artikel wird beispielsweise vorausgesetzt, dass ein SSFS-Bild lokal bzw. auf Pixelebene und/oder je nach spezifischen Bildinhalten individuell korrigiert wird. Hierfür wird eine ortsabhängige PSF (Punktspreizfunktion) verwendet. Dies erfordert wiederum eine Vielzahl von Rechenschritten sowie eine pixelspezifische Auswahl geeigneter Korrekturfunktionen zum Erzeugen eines scharfen Bildes, was rechen- und zeitintensiv ist. Ferner erfordert dieser Ansatz eine Vielzahl von Bildaufnahmen mit einer speziell für EDOF-Aufnahmen ausgelegten Optik, was zeit- und kostenintensiv ist.

Weiterer Stand der Technik betreffend das allgemeine Verwenden von Korrekturfunktionen für fouriertransfor-

**EP 3 859 658 B1**

mierte Bilddaten findet sich in der folgenden Offenbarung: Guoan Zheng et al.: "Wide-field, high-resolution Fourier ptychographic microscopy" Nature Photonics, Bd. 7, Nr. 9, 28. Juli 2013 (2013-07-28), Seiten 739-745, XP055181687, ISSN: 1749-4884, DII: 10.1038/nphoton.2013.187, Seite 3 bis Seite 4.

Es besteht somit ein Bedarf dafür, Bildbearbeitungen zur Erhöhung der Schärfentiefe insbesondere für die Objektvermessung und ferner insbesondere zum Reduzieren einer erforderlichen Rechenzeit und Rechenkapazität zu verbessern.

Diese Aufgabe wird durch die Gegenstände der beigefügten unabhängigen Ansprüche gelöst. Vorteilhafte Weiterbildungen sind in den abhängigen Ansprüchen angegeben. Sämtliche der einleitenden Erläuterungen und Merkmale können auch bei der vorliegenden Erfindung vorgesehen sein bzw. auf diese zutreffen, sofern nicht anders angegeben oder ersichtlich.

Erfindungsgemäß wurde erkannt, dass bisherige Ansätze zum Bearbeiten von SSFS-Bildern zum Erhalten scharfer bzw. kontrastgesteigerter Bilder aufgrund der vorstehend geschilderten Nachteile verbesserungsbedürftig sind. Hierzu schlägt die Erfindung im Wesentlichen vor, das Ausmaß durchgeführter Korrekturen während der Bildbearbeitung zu begrenzen und, genauer gesagt, die Korrektur möglichst einheitlich und global durchzuführen. Anders ausgedrückt wird erfindungsgemäß eine Korrekturmöglichkeit in Form einer frequenzabhängigen Korrekturfunktion bereitgestellt, insbesondere zur Amplitudenkorrektur eines fouriertransformierten Ausgangsbildes (Fokusscanbild), wobei diese Korrekturfunktion möglichst global angewendet werden kann.

Anders ausgedrückt können für eine Mehrzahl von Pixeln (z.B. wenigstens 10 % oder wenigstens 50 % der Gesamtpixel) oder aber für sämtliche Pixel des Ausgangsbildes (bzw. deren entsprechenden Intensitätswerte) dieselbe Korrekturfunktion angewendet werden. Es muss also nicht mehr lokal bzw. auf Pixelebene untersucht werden, welche Korrektur durchgeführt werden soll. Stattdessen kann stets (d.h. für sämtliche Orte) dieselbe Korrekturfunktion verwendet werden, was Rechenzeit spart (beispielsweise da Schritte zum Identifizieren/Ausführen geeigneter lokaler Korrekturfunktionen entfallen können). Auch kann sichergestellt werden, dass die Korrekturfunktion selbst begrenzte Rechenkapazitäten erfordert, was eine gewisse Vorhersagbarkeit der erforderlichen Rechenkapazitäten und Rechendauer zur Bildbearbeitung gewährleistet.

Insgesamt wird somit das technische Problem gelöst, zunächst unscharf bzw. kontrastarm aufgenommene (digitale) Fokusscanbilder derart computerimplementiert zu bearbeiten, dass Bilder mit erhöhter Schärfentiefe (also EDOF-Bilder, die jedoch per SSFS-Bilderfassung erfasst wurden) computerimplementiert als digitale Bilddateien erzeugt werden, ohne dass unerwünscht hohe Rechenkapazitäten oder Rechenzeitdauern einer zur Bildbearbeitung verwendeten Computereinrichtung erforderlich sind. Wie nachstehend geschildert, werden hierfür Bilddateien in bestimmter Weise transformiert und korrigiert. Dabei wird auf die Eigenschaften einer verwendeten Computereinrichtung in der Weise eingegangen, dass rechenzeiterhöhende oder rechenkapazitätserhöhende Schritte (wie z.B. ein zunächst erforderliches Identifizieren geeigneter Korrekturfunktionen) soweit wie möglich vermieden werden. Genauer gesagt wird als technisches Mittel zur Lösung des obigen Problems ein zur Rechenzeitbegrenzung optimiertes Vorgehen der digitalen Bildbearbeitung gelehrt, insbesondere unter geeigneter Transformation und Korrektur erfasster Bilder bzw. Bilddateien.

Die hierin vorgestellten Lösungen eignen sich insbesondere für Objektvermessungen, wobei die Objekte bevorzugt industriell gefertigte Werkstücke sind. Insbesondere richtet die hierin vorgestellte Lösung auf das optische Vermessen von Objekten und ferner insbesondere auf die optische Koordinatenermittlung von bevorzugt räumlichen Koordinaten der Objektoberfläche. Vorzugsweise findet eine solche Objektvermessung innerhalb einer seriellen Produktfertigung statt, bei der einzelne Produkte z.B. zur Qualitätssicherung überprüft werden sollen. Diese Überprüfung kann vorteilhafterweise auch direkt innerhalb einer Fertigungslinie stattfinden, beispielsweise wenn Objekte einer Fertigungsstation entnommen und unter Durchlaufen einer Objektvermessungsstation weiter entlang einer Fertigungslinie transportiert werden.

Insbesondere wird ein Verfahren zur (digitalen) Bildbearbeitung, insbesondere für Objektvermessungen, vorgeschlagen, mit:

- Aufnahme eines Ausgangsbildes von einem Objekt mit einer Bilderfassungseinrichtung (z.B. einer digitalen Kamera), wobei das Ausgangsbild ein Fokusscanbild ist (oder auch SSFS-Bild), bei dem eine Fokuseinstellung (z.B. die Lage einer Fokusebene und/oder eine Brennweite und/oder ein Fokusabstand) der Bilderfassungseinrichtung während der Bildaufnahme (d.h. während der Einzelbilderfassung des Ausgangsbildes) variiert wird (z.B. mittels Mikrospiegelanordnungen, akusto- optischer Modulatoren oder aktuierter Linsen);
- (bevorzugt computerimplementiertes) Durchführen einer Fouriertransformation des Ausgangsbildes;
- Erzeugen eines korrigierten Bildes (Korrekturbildes) mittels einer frequenzabhängigen Korrekturfunktion, die auf die Fouriertransformierte des Ausgangsbildes angewendet wird (d.h. auf das fouriertransformierte Ausgangsbild angewandt wird).

Bevorzugt wird dabei für eine Mehrzahl unterschiedlicher Pixel des Ausgangsbildes dieselbe Korrekturfunktion verwendet wird, insbesondere unabhängig von Pixelwerten dieser Pixel.

Im Gegensatz zu vorstehenden Lösungen aus dem Stand der Technik kann insbesondere auf das Anwenden einer nur lokal wirksamen und/oder fokus-unabhängigen PSF verzichtet werden. Die alternativ vorgesehene Fourriertransformation wirkt hingegen bevorzugt global auf alle Pixel im Bildraum.

Die Fokusverstellgeschwindigkeit bei Aufnahme des Ausgangsbildes ist bevorzugt größer als eine Bilderfassungsrate, um die Fokusvariation während der Aufnahme eines Einzelbildes zu ermöglichen. Beispiele für geeignete Geschwindigkeiten sind in der Figurenbeschreibung genannt.

Das Verfahren kann allgemein computerimplementiert ausgeführt werden, insbesondere hinsichtlich der Maßnahmen des Durchführens einer Fouriertransformation und/oder des Erzeugens (z.B. Berechnens) eines Korrekturbildes. Auch sämtliche weiteren hierin geschilderten Verfahrensmaßnahmen können, sofern nicht anders angegeben oder ersichtlich, computerimplementiert durchgeführt werden. Die Aufnahme des Ausgangsbildes kann durch Ansteuern der Bilderfassungseinrichtung und/oder Speichern des hiervon erfassten Ausgangsbildes in einer digitalen Speichereinrichtung ebenfalls als computerimplementiert bezeichnet werden.

Sämtliche hierin erfassten und erzeugten Bilder können digitale Bilder (d.h. Bilddateien) sein, die z.B. in an sich bekannter Weise in einem geeigneten digitalen Datenformat vorliegen. Beispielsweise können einzelne Pixelwerte (d.h. Intensitätswerte an entsprechenden Pixelpositionen) in bzw. als entsprechende Bilddateien gespeichert werden. Sämtliche hierin geschilderten Maßnahmen können nutzerautonom (d.h. automatisch und/oder ohne zwingend erforderliche Nutzereingaben) ausgeführt werden, beispielsweise nachdem ein Objektvermessungsvorgang durch einen Nutzer initiiert bzw. ausgelöst wurde.

Das schlussendlich erzeugte Korrekturbild kann für eine automatische oder manuelle Objektvermessung und insbesondere Qualitätsüberprüfung des Objekts verwendet werden. Hierfür können an sich bekannte Bildauswertealgorithmen, Mustererkennungsverfahren und dergleichen verwendet werden.

Die Variation der Fokuseinstellung kann gemäß bekannter und einleitend geschilderter SSFS-Ansätze stattfinden. Insbesondere kann bei geöffneter Blende und/oder anhaltender Belichtungszeitdauer die Fokuseinstellung variiert werden. Dies kann als das Abscannen eines gewissen Fokusbereichs bezeichnet werden, also als das Verschieben einer Fokusebene innerhalb eines entsprechenden Scanbereichs. Nachstehend wird deshalb auch statt von einer Variation der Fokuseinstellung von einem Fokusscannen gesprochen und auf entsprechende Scanbereiche Bezug genommen.

Auf diese Weise kann zunächst ein in der Regel unscharfes und kontrastarmes SSFS-Bild erzeugt werden. Dieses kann mittels der erfindungsgemäßen Korrekturfunktion dann zu einem Bild mit rechnerisch bzw. künstlich vergrößerter Tiefenschärfe umgerechnet bzw. bearbeitet werden. Das erhaltene, hierin als Korrekturbild bezeichnete Bild kann deshalb auch als ein EDOF-Bild bezeichnet werden, auch wenn die anfängliche Erfassung des Ausgangsbildes (SSFS-Bild) nicht mittels klassischer EDOF-Ansätze erfolgt (z.B. nicht mit Erfassen einer Mehrzahl von unabhängigen Bildern, die jeweils mit unterschiedlichen Fokuseinstellungen aufgenommen wurden).

Mittels der Fouriertransformation können die Bildinhalte (insbesondere Bild- oder Ortsfrequenzen) in den Amplituden- und Phasenraum transformiert werden, wobei für das weitere Korrekturverfahren bevorzugt nur Amplituden betrachtet werden. Fouriertransformationen sind an sich aus dem Stand der Technik bekannt. Die Korrekturfunktion kann sich vorzugsweise auf eine Korrektur der Amplitude beschränken. Mittels der Korrekturfunktion wird also optional keine Phasenkorrektur durchgeführt, da dies Bildinhalte verfälschen könnte. Dies begrenzt den erforderlichen Rechenaufwand, führt gleichzeitig aber zu zufriedenstellenden Ergebnissen. Beispielsweise wurde erfindungsgemäß erkannt, dass bei der Aufnahme von Fokusscanbildern die Amplituden einzelner Bildfrequenzen und insbesondere hoher Bildfrequenzen vergleichsweise stark unterdrückt (d.h. gedämpft) werden können. Mittels der hierin vorgestellten Korrekturfunktion können derartige Amplitudenunterdrückungen rückgängig gemacht werden und insbesondere unerwünscht stark gedämpfte Amplituden wieder verstärkt werden. Auf diese Weise kann eine insbesondere nach einer Rück-Transformation scharfe Abbildung erzielt werden.

Vorteilhafterweise sieht die Erfindung vor, in der vorstehend geschilderten Weise dieselbe Korrekturfunktion unabhängig von einem aktuell betrachteten Pixel oder Bereich des Ausgangsbildes zu verwenden bzw. auf per Foruriertransformation global transformierte Bildinhalte anzuwenden. Insbesondere kann die Korrekturfunktion global gelten und für sämtliche Pixel bzw. Bilder des Ausgangsbildes verwendet werden.

Eine Möglichkeit zur Korrektur des Ausgangsbildes besteht darin, eine Pixelwertmatrix des Ausgangsbildes aufzustellen, diese fourierzutransformieren und dann den entsprechend transformierten Ausdruck (vorzugsweise aber nur die Amplituden- und nicht die Phasenanteile) frequenzabhängig mittels der Korrekturfunktion zu korrigieren. Dabei kann die Korrekturfunktion für jede Frequenz (oder zumindest für eine Mehrzahl von Frequenzen) einen Amplitudenkorrekturfaktor umfassen, der mit dem entsprechenden Amplitudenanteil der fouriertransformierten Pixelwertmatrix multipliziert werden kann. Der Korrekturfaktor kann insbesondere eine Verstärkung, gegebenenfalls aber auch eine Abschwächung der entsprechenden Amplituden bewirken. Das Ergebnis dieser Korrektur (d.h. der frequenzabhängigen bzw. frequenzspezifischen Multiplikation der Amplitudenanteile) kann dann durch Rücktransformation wieder in eine Pixelwertmatrix umgerechnet werden, wobei diese Pixelwertmatrix dem hierin geschilderten Korrekturbild entsprechen kann.

Der vorstehend geschilderte Zusammenhang kann mittels nachstehender Gleichung ausgedrückt werden, in der $Bild_{korr}$ die Pixelwertmatrix des Korrekturbildes bezeichnet, $Bild_{SSFS}$ die Pixelwertmatrix des Ausgangsbildes (Fokusscanbild) bezeichnet, K(f) die frequenzabhängige Korrekturfunktion enthaltend Amplitudenkorrektur-Faktoren für jede betrachtete Frequenz f bezeichnet, F eine Fouriertransformation bezeichnet und $F^{-1}$ eine Fourier-Rücktransformation bezeichnet:

$$Bild_{korr} = F^{-1}(F(Bild_{SSFS}) * K(f)) \qquad\qquad \text{Gleichung (1)}$$

Gemäß einer Weiterbildung ist die Korrekturfunktion für eine frequenzabhängige Amplitudenkorrektur des Ausgangsbildes verwendbar oder, anders ausgedrückt, eingerichtet, eine frequenzabhängige Amplitudenkorrektur des Ausgangsbildes durchzuführen. Wie erwähnt, können hierfür frequenzabhängige Amplituden-Korrekturfaktoren innerhalb der Korrekturfunktion hinterlegt sein.

Weiter sieht eine Ausführungsform vor, dass dann, wenn für eine Frequenz des Ausgangsbildes keine Korrekturfunktion vorliegt, eine verwendbare Korrekturfunktion aus wenigstens einer Korrekturfunktion für eine andere Frequenz berechnet wird. Bei der Frequenz kann es sich wiederum um eine Orts- oder auch Bildfrequenz handeln. Bei der verwendbaren Korrekturfunktion kann es sich um diejenige Korrekturfunktion handeln, die schlussendlich zur Korrektur verwendet wird und/oder als resultierende aus der Berechnung anhand der wenigstens einen weiteren Korrekturfunktion für eine andere Frequenz hervorgeht. Beispielsweise kann die verwendbare Korrekturfunktion aus der wenigstens einen Korrekturfunktion (oder vorzugsweise wenigstens zwei Korrekturfunktionen) interpoliert werden, insbesondere linear interpoliert werden.

In analoger Weise kann vorgesehen sein, dass dann, wenn für eine Frequenz des Ausgangsbildes kein Korrekturausdruck (z.B. Korrekturfaktor und genauer gesagt Amplitudenkorrekturfaktor) innerhalb der Korrekturfunktion vorliegt, ein verwendbarer Korrekturausdruck aus wenigstens einem Korrekturausdruck für eine andere Frequenz berechnet wird. Beispielsweise können dann Korrekturausdrücke und insbesondere Amplituden-Korrekturfaktoren der Korrekturfunktion interpoliert werden, um für die gesuchte Frequenz einen geeigneten Amplituden-Korrekturfaktor zu bestimmen.

Mittels der vorstehenden Varianten werden die Anforderungen an die Korrekturfunktion gesenkt und kann flexibel auf unvollständige Korrekturfunktionen reagiert werden, was eine aufwandsarme und dennoch zuverlässige Bildbearbeitung ermöglicht.

Erfindungsgemäß wird eine Korrekturfunktion verwendet, die auf Basis eines Vergleichs eines Referenzbildes eines Objekts und eines Fokusscanbildes (SSFS-Bild) desselben Objekts ermittelt wurde. Insbesondere im Rahmen des Verfahrens kann der Schritt des Ermittelns der Korrekturfunktion auf Basis dieses Vergleichs (eines Referenzbildes eines Objekts und eines Fokusscanbildes desselben Objekts) als eine gesonderte Maßnahme vorgesehen sein.

Das Referenzbild kann sich durch eine bevorzugte Tiefenschärfe und/oder einen bevorzugten Bildkontrast auszeichnen, der auch zu der gewünschten Tiefenschärfe und/oder dem gewünschten Bildkontrast der zu ermittelnden Korrekturbilder vergleichbar ist. Es kann sich also um eine Art Zielbild oder auch ideales Bild handeln, das mit dem Korrekturbild angenähert werden soll. Möglichkeiten zum Erfassen des Referenzbildes werden nachstehend noch erläutert. Insbesondere kann das Referenzbild mittels klassischer EDOF-Verfahren basierend auf einer Mehrzahl von einzelnen Bilderfassungen mit jedoch unterschiedlichen Fokuseinstellungen erzeugt werden. Auf diese Weise kann die Tiefenschärfe künstlich erhöht werden (d.h. rechnerisch, ohne dass dies mit der Bilderfassungseinrichtung für sich genommen physikalisch möglich ist).

Durch den Vergleich kann ermittelt werden, welche an sich gewünschten Eigenschaften (insbesondere Bildfrequenzen) im Fokusscanbild gegenüber dem Referenzbild unterdrückt und/oder verfälscht werden. Die Korrekturfunktion kann dann dazu eingerichtet sein, diese Abweichungen zum Referenzbild zumindest teilweise zu korrigieren. Dies betrifft insbesondere die hierin geschilderte Amplitudenkorrektur, also bevorzugt das Anpassen und insbesondere Verstärken von im Fokusscanbild unterdrückten bzw. gedämpften Frequenzen (genauer gesagt den Amplituden dieser Bildfrequenzen).

Durch das Ermitteln einer solchen Korrekturfunktion wird eine einfache Möglichkeit bereitgestellt, das Fokusscanbild in einer gewünschten Weise zu korrigieren. Insbesondere kann die Korrekturfunktion auch durch Benutzer mit geringen Qualifikationen ermittelt werden und vorzugsweise auch anwendungsspezifisch, objektspezifisch und/oder scanbereichsspezifisch ermittelt werden, wie nachstehend noch erläutert. Weiter wird auf diese Weise das erfindungsgemäß allgemein bevorzugte Ermitteln einer globalen Korrekturfunktion ermöglicht, da sozusagen übergeordnet betrachtet wird, welche Art Frequenzen in welcher Weise unterdrückt werden und dies dann unabhängig von konkreten lokalen Gegebenheiten bzw. einzelnen Pixelwerten auf vorzugsweise das gesamte Fokusscanbild im Rahmen der hierin geschilderten Korrektur angewandt werden kann.

Erfindungsgemäß ist vorgesehen, dass die Korrekturfunktion auf Basis eines Vergleichs des frequenzabhängigen Amplitudenverhältnisses des fouriertransformierten Referenzbildes und des fouriertransformierten Fokusscanbildes ermittelt wird bzw. wurde. Beispielsweise kann ein Quotient aus dem fouriertransformierten Referenzbild und fouriertransformierten Fokusscanbild gebildet werden, was noch anhand nachstehender Gleichungen beispielhaft erläutert wird. Eine Frequenzabhängigkeit wird dabei durch die jeweilige Fouriertransformation erreicht, da dabei Matrizen erhalten werden, deren Einträge Frequenzen in der Bildmatrix repräsentieren. Durch Bilden eines solchen Amplitudenverhältnisses kann rechnerisch aufwandsarm und schnell die erfolgte frequenzabhängige Dämpfung bzw. Unterdrückung einzelner Bildfrequenzen im Fokusscanbild ermittelt und mittels der Korrekturfunktion zumindest anteilig rückgängig gemacht werden.

Insbesondere kann die Korrekturfunktion (z.B. im Rahmen des vorstehend geschilderten Vergleichs) wie folgt ermittelt werden, wobei K wiederum die Korrekturfunktion bezeichnet, f die Frequenz (d.h. Bildfrequenz oder Ortsfrequenz), abs() eine Absolut-Betragsfunktion ist, Bild_Kalib eine Pixelwertmatrix des Referenzbildes von dem Objekt ist und Bild_Kalib$_{SFFS}$ eine Pixelwertmatrix des Fokusscanbildes von dem Objekt (Kalibrierstruktur) ist:

$$K(f) : abs(F(Bild\_Kalib)) / abs (F(Bild\_Kalib_{SFFS})) \qquad \text{Gleichung (2)}$$

Dabei können im Rahmen der Fouriertransformationen, die wiederum mit F bezeichnet sind, erneut lediglich die Amplitudenanteile, nicht aber die Phasenanteile betrachtet werden. Ursächlich hierfür ist das Anwenden der Absolut-Betragsfunktionen. Auch werden für die Berechnung von K(f) die Fouriertransformierten jeweils an der Frequenz f ausgewertet.

Wie im Zusammenhang mit der Gleichung (2) bereits angedeutet, kann das vom Referenzbild und Ausgangsbild erfasste gemeinsame Objekt eine Kalibrierstruktur sein. Insbesondere sieht eine Weiterbildung vor, dass als Objekt eine Kalibrierstruktur verwendet wird, die zumindest bereichsweise wenigstens 50 oder wenigstens 100 und bevorzugt wenigstens 400 Linienpaare pro Millimeter aufweist und/oder die mit einer Optik entsprechend scharf abbildbar ist, da diese eine ausreichende Grenzauflösung aufweist. Die Grenzauflösung (als Periode p) der abbildenden Optik ist dabei gegeben mit p = λ /(2* NA), mit λ als Abbildungswellenlänge und NA als (objektseitige) numerische Apertur des Abbildungssystems. Beispielsweise kann die Grenzauflösung zum Abbilden der Kalibrierstruktur wie folgt gewählt sein: p = 0,5μm / (2*0,1) = 2,5μm, was 400 Linienpaaren pro Millimeter entspricht.

Die Kalibrierstruktur kann zweidimensional sein. Es kann sich z.B. um ein ausgedrucktes optisches Target oder einen optischen Marker handeln. Insbesondere kann die Kalibrierstruktur einen Siemensstern umfassen oder ein vergleichbares bekanntes optisches Target, das sich durch ein möglichst hohes Frequenzspektrum und/oder eine möglichst hohe Grenzfrequenz auszeichnet und z.B. den o.g. Richtwert für die Linienpaare pro Millimeter aufweist bzw. ermöglicht.

Bevorzugt ist die Kalibrierstruktur richtungsisotrop, was z.B. bei einem Siemensstern der Fall ist. Die Kalibrierstruktur kann auch als bzw. über eine flache Chrom-Maske realisiert sein. Diese kann z.B. mittels einer einzelnen Aufnahme erfasst werden.

Die Kalibrierstruktur ermöglicht vorteilhafterweise, dass für viele Bildfrequenzen entsprechend scharf abgebildete Referenzen als Referenzbild erfassbar sind und somit die frequenzabhängigen Amplitudendämpfungen im Fokusscanbild ausreichend identifizierbar sind (da im erfassten Referenzbild entsprechend vergleichbare Merkmale hierfür vorhanden und abgebildet sind). Somit wird ein aussagekräftiges und aufwandsarm erfassbares Referenzbild bereitgestellt.

Alternativ oder zusätzlich kann vorgesehen sein, dass das Referenzbild mittels eines EDOF-Verfahrens erzeugt wird, wobei hierunter insbesondere zu verstehen ist, dass eine Mehrzahl von Bildern des Objekts (und/oder der Kalibrierstruktur) mit voneinander abweichenden Fokuseinstellungen erfasst werden und zum Erzeugen eines EDOF-Bildes mit erhöhter Tiefenschärfe zusammengesetzt bzw. verrechnet werden. Da durch bekannte EDOF-Algorithmen Objektbilder mit einer bevorzugten Tiefenschärfe erzeugt werden können, kann somit ebenfalls ein aussagekräftiger Referenzzustand abgebildet und als Vergleich bzw. Referenz für das Fokusscanbild herangezogen werden.

Ebenso kann vorgesehen sein, eine Kalibrierstruktur (insbesondere gemäß jeglichem obigen bereits diskutierten Aspekt) mehrfach aus unterschiedlichen Blickrichtungen aufzunehmen und hieraus das Referenzbild zu erzeugen. Hierfür kann die Kalibrierstruktur um die optische Achse des Abbildungssystems und/oder allgemein in der Objektebene rotiert werden, wodurch auch jeweils eine Richtungsisotropie erzeugbar ist. Durch Aufnahme einer Kalibrierstruktur aus mehreren Richtungen können die insgesamt abgebildeten Ortsfrequenzen (also das entsprechende Ortsfrequenzspektrum) erweitert werden, auch wenn innerhalb der Kalibrierstruktur zunächst nur ein begrenztes Frequenzspektrum vorhanden ist. Auf diese Weise können die Anforderungen an die Kalibrierstruktur reduziert werden und kann dennoch ein aussagekräftiges Referenzbild erzeugt werden, um die Korrekturfunktion zu ermitteln.

Wie im Folgenden erläutert, kann die Korrekturfunktion objektspezifisch ermittelt werden, z.B. um bevorzugt für eine Mehrzahl gleichartiger Objekte darauf basierend Objektvermessungen durchzuführen. Zusätzlich und alternativ kann die Korrekturfunktion scanbereichsspezifisch ermittelt werden, z.B. um für bei Erfassung des Ausgangsbildes tatsächlich abgefahrene Scanbereiche (d.h. tatsächliches Variationsspektrum der Fokuseinstellung) als spezifisch angepasste Korrekturfunktion zu dienen. Die Korrekturfunktion kann also für einen spezifischen angewandten Fokusscanbereich bestimmt bzw. ermittelt worden sein. In beiden Fällen kann die Qualität der Bildkorrektur erhöht werden (d.h. die Tiefenschärfe des im Rahmen des korrekturerzeugten Korrekturbildes verbessert werden), da die Korrekturfunktion bei Erfassung des Ausgangsbildes an speziell vorliegende Bedingungen gezielt angepasst sind. Es kann auch vorgesehen sein, die Korrekturfunktion unabhängig von dem erfassten Objekt und z.B. unter gleichartigen Aufnahmebedingungen bei der späteren Objektvermessung (z.B. in den gleichen Räumlichkeiten, in dem gleichen Labor oder allgemein unter den gleichen Lichtbedingungen) zu erfassen oder, genauer gesagt, anhand von Bildaufnahmen, die unter entsprechenden analogen Umgebungsbedingungen wie eine spätere Objektvermessung erfolgen.

Wie erwähnt, können auch objektspezifische Korrekturfunktionen bereitgestellt werden. Dann kann insbesondere vorgesehen sein, dass im Rahmen der Ermittlung der Korrekturfunktionen dasselbe oder aber ein gleichartiges Objekt per Referenzbild und Ausgangsbild erfasst wird, welches auch später im Rahmen einer realen Objektvermessung vermessen werden soll. Beispielsweise kann dann ein Bauteil aus einer Fertigungslinie entnommen werden, zum Ermitteln der Korrekturfunktion per Referenzbild und Ausgangbild erfasst werden und können dann mit dieser objektspezifischen (bzw. objektart-spezifischen) Korrekturfunktion weitere gleichartige Objekte aus dieser Fertigungslinie optisch vermessen werden. Auf diese Weise wird die Korrekturfunktion speziell für eine konkrete Erfassungs- bzw. Vermessungsaufgabe ermittelt, wodurch die Qualität der Bildbearbeitung und insbesondere -korrektur erhöht wird.

Allgemein können spezifische Korrekturfunktionen dadurch erzeugt werden, dass die zum Ermitteln der Korrekturfunktionen verwendeten Bilder (insbesondere das SSFS-Bild) entsprechend spezifisch sind, d.h. dieselbe Objektart erfassen, einen selben Scanbereich aufweisen oder unter vergleichbaren (z.B. Licht-) Bedingungen aufgenommen werden.

Genauer gesagt sieht eine Weiterbildung vor, dass die Korrekturfunktion für eine spezifische Variation der Fokuseinstellung (z.B. das Abfahren eines spezifischen Fokus-Scanbereichs) bei Aufnahme des Ausgangsbildes verwendbar ist. Anders ausgedrückt kann die Korrekturfunktion also für eine spezifische Variation der Fokuseinstellung, die bei Aufnahme des Ausgangsbildes erfolgt, gültig sein und/oder speziell hierfür ermittelt, gespeichert und/oder erzeugt werden. Es kann also auch eine scanbereichsspezifische Sammlung von Korrekturfunktionen ermittelt und vorzugsweise hinterlegt werden, beispielsweise in einer Speichereinrichtung einer nachstehend erläuterten erfindungsgemäßen Bilderfassungsanordnung. Je nach späterer real durchgeführter Objektvermessungen und insbesondere realer Erfassung des Ausgangsbildes, kann dann die passende Korrekturfunktion zur Korrektur dieses Ausgangsbildes ausgewählt werden. Hierdurch kann insgesamt die Qualität verbessert werden, da eine an die spezifischen Erfassungsbedingungen angepasste Korrekturfunktion verwendet wird. Im Rahmen des vorstehenden Vergleichs zu einem Referenzbild kann das dort verwendete SSFS-Bild also mit der spezifischen Fokuseinstellungsvariation aufgenommen worden sein.

In diesem Zusammenhang kann ferner vorgesehen sein, dass dann, wenn zur Korrektur des Ausgangsbildes keine verwendbare (oder auch gültige) Korrekturfunktion vorliegt (d.h. keine für die spezifische Variation der Fokuseinstellung verwendbare oder gültige Korrekturfunktion), eine verwendbare (fokuseinstellungsvariationsspezifische) Korrekturfunktion auf Basis wenigstens einer vorliegenden Korrekturfunktion berechnet wird. Insbesondere kann eine verwendbare Korrekturfunktion interpoliert werden. Anders ausgedrückt können also aus einer vorstehend erwähnten Sammlung von vorzugsweise vorab hinterlegten scanbereichsspezifischen Korrekturfunktionen eine für eine tatsächlich durchgeführte bzw. vorliegende Variation der Fokuseinstellung passende Korrekturfunktionen berechnet und insbesondere interpoliert werden. Auf diese Weise werden Erfordernisse an die Vollständigkeit der zu ermittelnden scanbereichsspezifischen Korrekturfunktionen begrenzt und kann dennoch eine hohe Qualität der Bildkorrektur gewährleistet werden.

Die Erfindung betrifft auch das Verwenden einer frequenzabhängigen Korrekturfunktion für eine Mehrzahl unterschiedlicher Pixel eines fouriertransformierten Ausgangsbildes, das ein Fokusscanbild ist, bei dem eine Fokuseinstellung der Bilderfassungseinrichtung während der Bildaufnahme variiert wird.

Dabei kann insbesondere vorgesehen sein, dass mit der Korrekturfunktion eine frequenzabhängige Amplitudenkorrektur des Ausgangsbildes (bzw. von dessen jeweiligen Pixeln bzw. Pixelwerten) durchführbar ist.

Die Verwendung kann jegliches weitere Merkmal, jeglichen weiteren Verfahrensschritt, jegliche weitere Maßnahme und jegliche Weiterbildung umfassen, um sämtliche der hierin geschilderten Vorteile, Effekte, Betriebszustände oder Verfahrenszustände bereitzustellen. Insbesondere kann die frequenzabhängige Korrekturfunktion im Sinne jeglicher hierin geschilderter Verfahrensaspekte verwendet und weitergebildet werden. Allgemein kann also ein Verfahren gemäß jeglichen der vorstehenden Aspekte durch entsprechendes Verwenden der Korrekturfunktion durchgeführt werden bzw. kann die Verwendung jegliche der vorstehenden im Zusammenhang mit den Verfahrensmerkmalen erläuterten Varianten, Verwendungen und Weiterbildungen ebenfalls aufweisen.

Ferner betrifft die Erfindung eine Bilderfassungsanordnung, insbesondere zur Objektvermessung, mit:

- einer (vorzugsweise digitalen) Bilderfassungseinrichtung, die dazu eingerichtet ist, wenigstens ein Ausgangsbild unter einer Variation einer Fokuseinstellung der Bilderfassungseinrichtung während der Bildaufnahme aufzunehmen (sodass das Ausgangsbild insbesondere ein Fokusscanbild der hierin geschilderten Art ist); und
- einer Computereinrichtung, die dazu eingerichtet ist, eine Fouriertransformation des Ausgangsbildes durchzuführen und ein korrigiertes Bild mittels einer frequenzabhängigen Korrekturfunktion zu erzeugen, die auf die Fouriertransformierte des Ausgangsbildes angewendet wird. Vorzugsweise wird dabei für eine Mehrzahl unterschiedlicher Pixel des Ausgangsbildes dieselbe Korrekturfunktion verwendet.

Die Computereinrichtung kann digital und/oder elektronisch betreibbar sein. Sie kann wenigstens eine digitale und/oder elektronische Prozessoreinrichtung umfassen. Ferner kann sie eine bevorzugt digitale Speichereinrichtung umfassen, in der z.B. eine Mehrzahl von scanbereichsspezifischen, objektspezifischen oder aber aufnahmebedingungsspezifischen (d.h. Umgebungsbedingungen während der Aufnahme betreffende) Korrekturfunktionen hinterlegt sind. Die Computereinrichtung kann dazu eingerichtet sein, je nach den aktuell vorliegenden Bedingungen (z.B. dem aktuellen Scanbereich, dem Objekt oder den Aufnahmebedingungen) eine geeignete Korrekturfunktion auszuwählen und/oder in der vorstehend erläuterten Weise anhand von hinterlegten Korrekturfunktion(en) zu ermitteln (beispielsweise durch Interpolation).

Allgemein kann die Computereinrichtung in die Bilderfassungseinrichtung integriert sein. Es kann sich aber auch um eine separate (z.B. in einem separaten Gehäuse oder aber eine räumlich getrennt bereitgestellte) Computereinrichtung handeln, z.B. um einen herkömmlichen PC. Die Computereinrichtung kann von der Bilderfassungseinrichtung und insbesondere einem Bildsensor erfasste Bilddateien (insbesondere Pixelwertmatrizen) erhalten. Die Computereinrichtung kann dann dazu eingerichtet sein, sämtliche hierin geschilderten Bildbearbeitungs- und/oder -verarbeitungsschritte durchzuführen.

Insbesondere kann die Computereinrichtung eine Korrektur des Ausgangsbildes gemäß jeglicher hierin geschilderten Aspekte durchführen. Dabei können Zwischenergebnisse und auch Endergebnisse (also das korrigierte und bevorzugt fourier-rücktransformierte Korrekturbild) in der Speichereinrichtung gespeichert werden.

Allgemein kann die Bilderfassungsanordnung sämtliche weiteren Merkmale, Funktionen und Eigenschaften aufweisen, um sämtliche der hierin geschilderten Vorteile, Betriebszustände, Verfahrensschritte und Effekte bereitzustellen und/oder auszuführen. Insbesondere können sämtliche Erläuterungen zu und Weiterbildungen von vorstehenden Verfahrensmerkmalen auch auf die gleichlautenden Merkmale der Bilderfassungsanordnung zutreffen bzw. bei dieser vorgesehen sein.

Gemäß einer Weiterbildung ist vorgesehen, dass mit der Bilderfassungsanordnung eine Mehrzahl gleichartiger Objekte aufeinanderfolgend vermessbar ist und die Korrekturfunktion für diese spezifische Objektart gültig und/oder verwendbar ist (d.h. objektartspezifisch ermittelt wurde (siehe oben) und/oder wobei die Korrekturfunktion für die spezifische Fokuseinstellungsvariation bei Aufnahme des Ausgangsbildes verwendbar ist. In der vorstehend erläuterten Weise können dann an spezifische Erfassungsbedingungen bzw. an eine spezifische Erfassungsaufgabe angepasste Korrekturfunktionen bereitgestellt und verwendet werden, wodurch die Qualität der Bildbearbeitungen und insbesondere -korrektur erhöht wird.

Die Erfindung wird im Folgenden anhand der beigefügten Figuren erläutert. Für gleichartige oder gleichwirkende Merkmale können dabei figurenübergreifende gleiche Merkmale verwendet werden.

Fig. 1    zeigt eine Bilderfassungsanordnung gemäß einer erfindungsgemäßen Ausführungsform, die ein Verfahren gemäß einer erfindungsgemäßen Ausführungsform ausführt;

Fig. 2    zeigt ein schematisches Ablaufschema eines erfindungsgemäßen Verfahrens gemäß dem Ausführungsbeispiel aus Fig. 1.

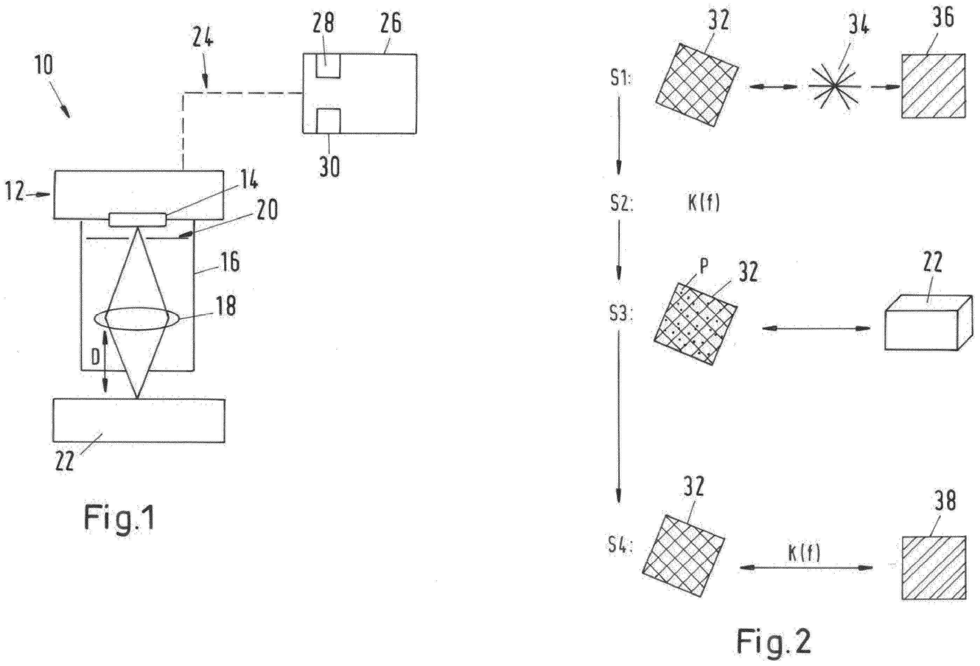

In Fig. 1 ist eine Bilderfassungsanordnung 10 gemäß einem Ausführungsbeispiel der Erfindung gezeigt, wobei die Bilderfassungsanordnung 10 das nachstehend auch anhand von Fig. 2 erläuterte Verfahren gemäß einer Ausführungsform der Erfindung ausführt. Der Vollständigkeit halber sei erwähnt, dass in diesem Zusammenhang auch eine erfindungsgemäße Verwendung einer Korrekturfunktion stattfindet.

Die Bilderfassungsanordnung 10 umfasst eine Bilderfassungseinrichtung 12 in Form einer Digitalkamera. Diese umfasst einen Bildsensor 14, der in an sich bekannter Weise bei einer Belichtung eine digitale Pixelwertmatrix erzeugt. Ferner gezeigt ist eine Objektivanordnung 16, die lediglich beispielhaft eine einzelne Objektivlinse 18 umfasst. Mittels der Objektivanordnung 18 können Fokuseinstellungen vorgenommen werden und insbesondere die Lage einer Fokusebene bzw. deren Fokusabstand D als eine Fokuseinstellung variiert werden. Die Darstellung der Objektivanordnung 16 ist lediglich schematisch und beispielhaft. Hintergründe bezüglich der für die hierin vorausgesetzte SSFS-Bilderfassung verwendbaren Objektiven und Linsen finden sich z.B. in den einleitend genannten wissenschaftlichen Artikel von Lu et al. Nur schematisch angedeutet ist ferner eine Blende 20, die zur Bilderfassung geöffnet wird, um den Bildsensor 14 zu belichten.

Zur Aufnahme von Fokusscanbildern (SSFS-Bildern) wird die Blende 20 geöffnet und offen gehalten, während der Fokusabstand D durch z.B. Verschieben der Linse 18 variiert wird. Bevorzugt wird dabei, dass eine Änderungsgeschwindigkeit des Fokusabstands D (also die Fokussiergeschwindigkeit) hinreichend schnell und insbesondere größer als eine Bilderfassungsrate ist, sodass innerhalb einer Bildbelichtungszeit Belichtungen mit mehreren unterschiedlichen Fokuseinstellungen (bzw. Fokusabständen D) erfolgen können.

Während der Bilderfassung wird ferner bevorzugt, dass die Bildsituation unverändert bleibt, also z.B. keine Relativbewegungen zum Objekt 22 stattfinden. Insbesondere bevorzugt wird, dass die Bilderfassungseinrichtung 18 bzw. das Objektiv 16 telezentrisch ist. Weiter wird bevorzugt, dass sich die Umgebungsbedingungen während dem Erfassen eines Fokusscanbildes nicht verändern, was insbesondere für eine Belichtungssituation gilt.

Lediglich beispielhaft kann von einer Fokussiergeschwindigkeit von 500mm/s gegenüber einer Bilderfassungsrate von 300 Hz ausgegangen werden, was einem Fokusscanbereich von ca. 1,7mm während einer Belichtung ermöglichen würde.

Derjenige Bereich, innerhalb dem der Fokusabstand D verändert wird, wird auch als Fokusscanbereich bezeichnet. Er betrifft die Differenz bzw. den Abstand der größten und kleinsten Fokuseinstellung, also im vorliegenden Beispiel des größten und kleinsten Fokusabstandes D.

Ein auf diese Weise erfasstes Bild wird über eine gestrichelt angedeutete Datenleitung 24 an eine Computereinrichtung 26 übermittelt. Diese umfasst eine schematisch angedeutete Prozessoreinrichtung 28 und eine ebenfalls schematisch angedeutete Speichereinrichtung 30. Die Prozessoreinrichtung 28 ist dazu eingerichtet, Algorithmen auszuführen, die z.B. auf der Speichereinrichtung 30 hinterlegt sind. Durch Ausführen dieser Algorithmen (und/oder allgemein von Programmanweisungen, die z.B. in den Algorithmen enthalten sind) kann eine Korrektur des von der Bilderfassungseinrichtung 12 erfassten Ausgangsbildes gemäß jeglicher hierin geschilderte Varianten erfolgen. Das schlussendlich erzeugte Korrekturbild kann dann in der Speichereinrichtung 30 abgespeichert werden.

Wie geschildert, erfasst die Bilderfassungseinrichtung 12 ein Fokusscanbild eines zu vermessenden Objekts 22 und übermittelt diese per Datenleitung 24 an die Computereinrichtung 26. Die dann stattfindenden Korrekturmaßnahmen, die durch die Computereinrichtung 26 ausgeführt werden, werden nachstehend anhand von Fig. 2 näher erläutert.

In Fig. 2 wird der Ablauf eines Korrekturverfahrens, wie mit der Anordnung 10 aus Fig. 1 ausführbar, näher erläutert.

Dabei wird zunächst auf das Ermitteln einer Korrekturfunktion eingegangen, was erfindungsgemäß als gesondert ausgeführte bzw. umfasste Verfahrensmaßnahmen vorgesehen sein kann, aber nicht in jedem Fall erforderlich ist, da auch auf vormals ermittelte bzw. bereits verfügbare Korrekturfunktionen zurückgegriffen werden kann.

In einem Schritt S1 wird ein Fokusscanbild 32 in der vorstehend erläuterten Weise unter Variation des Fokusabstandes D von einer Kalibrierstruktur 34 (beispielhaft einem Siemensstern) erfasst. Ebenso wird ein deutlich schärferes und einen Zielstand darstellendes Referenzbild 36 von derselben Kalibrierstruktur 34 erfasst. In einem Schritt S2 wird dann eine Korrekturfunktion K, die frequenzabhängig ist, in der einleitend geschilderten Weise mittels der Gleichung (2) ermittelt.

In diesem Zusammenhang können die vorstehend erwähnten spezifischen Korrekturfunktionen K dadurch erzeugt werden, dass wenigstens eines der Bilder 32, 34 in entsprechend spezifischer Weise erzeugt wurde (d.h. die spezifische Objektart erfasst, unter den spezifischen Aufnahmebedingungen erfasst wurde oder mit dem spezifischen Scanbereich).

In einem Schritt S3 wird von dem zu vermessenden Objekt 22 wiederum ein Fokusscanbild 32 erfasst.

In einem Schritt S4 wird dieses Fokusscanbild 32, das ein Ausgangsbild der eigentlichen Bildbearbeitung ist, fouriertransformiert und mittels der frequenzabhängigen Korrekturfunktion $K(f)$ unter anschließender Fourier-Rücktransformation bearbeitet, um ein schärferes und kontrastreicheres Korrekturbild 38 zu erhalten. Hierfür kann auf die vorstehend erläuterte Gleichung (1) und die in diesem Zusammenhang geschilderten Maßnahmen zurückgegriffen werden.

Nicht gesondert in Fig. 2 dargestellt ist, dass auch anderweitige Möglichkeiten zum Ermitteln der Korrekturfunktion $K(f)$ bestehen, insbesondere die im allgemeinen Beschreibungsteil erläuterten Möglichkeiten zum Ermitteln einer objektspezifischen, fokusscanbereichsspezifischen oder aber aufnahmebedingungsspezifischen Korrekturfunktion $K(f)$. Wurden vorab derartige Korrekturfunktionen K ermittelt, können diese z.B. in der Speichereinrichtung 30 der Computereinrichtung 26 hinterlegt werden. In einem zum Schritt S3 aus Fig. 2 vorgelagerten oder nachgelagerten Schritt kann dann zunächst eine geeignete Korrekturfunktion K ausgewählt werden. Erforderlichenfalls kann auch eine Korrekturfunktion K wie im einleitend geschilderten Beschreibungsteil berechnet und z.B. interpoliert werden. Dies gilt auch dann, wenn zwar keine entsprechend spezifischen Korrekturfunktionen ermittelt wurden, aber für eine bestimmte Frequenz im fouriertransformierten Ausgangsbild 32 keine geeignete Korrekturfunktion und/oder keine geeigneten Korrekturausdrücke innerhalb einer Korrekturfunktion (z.B. keine geeigneten Amplituden-Korrekturfaktoren) vorliegen.

Zu erwähnen ist, dass mittels der Korrekturfunktion K im gezeigten Beispiel und, wie vorstehend detaillierter ausgeführt, frequenzabhängige Amplitudenkorrekturen des fouriertransformierten Ausgangsbildes 32 stattfinden, wofür die Korrekturfunktion K für eine Mehrzahl von Bildfrequenzen entsprechende Amplituden-Korrekturfaktoren enthält, die dann auf die Amplitudenwerte der entsprechenden Bildfrequenzen im fouriertransformierten Ausgangsbild 32 angewendet werden (siehe obige Gleichung (1)).

**Patentansprüche**

1. Verfahren zur Bildbearbeitung, insbesondere für eine Objektvermessung,

   mit:

   - Aufnehmen eines Ausgangsbildes (32) von einem Objekt (22) mit einer Bilderfassungseinrichtung, wobei das Ausgangsbild ein Fokusscanbild ist, bei dem eine Fokuseinstellung (D) der Bilderfassungseinrichtung während der Bildaufnahme variiert wird;
   - Durchführen einer Fouriertransformation des Ausgangsbildes (32);
   - Erzeugen eines korrigierten Bildes (38) mittels einer frequenzabhängigen Korrekturfunktion (K), die auf die Fouriertransformierte des Ausgangsbildes (32) angewendet wird,

   **dadurch gekennzeichnet, dass** die Korrekturfunktion (K) auf Basis eines Vergleichs eines Referenzbilds (36) eines Objekts und eines Fokusscanbilds (32) desselben Objekts ermittelt wird,
   wobei im Rahmen des Vergleichs das frequenzabhängige Amplitudenverhältnis des fouriertransformierten Referenzbilds (36) und des fouriertransformierten Fokusscanbilds (32) ermittelt wird.

2. Verfahren nach Anspruch 1,
   wobei das zum Ermitteln der Korrekturfunktion abgebildete Objekt dem mittels des Ausgangsbildes (32) erfassten Objekt (22) entspricht oder eine Kalibrierstruktur (34) ist oder ein zu dem mittels des Ausgangsbildes (32) erfassten Objekt (22) gleichartiges Objekt ist.

3. Verfahren nach Anspruch 1 oder 2,

   wobei mit der Korrekturfunktion (K) eine frequenzabhängige Amplitudenkorrektur des Ausgangsbildes (32) durchführbar ist;
   und/oder wobei für eine Mehrzahl unterschiedlicher Pixel des Ausgangsbildes (32) dieselbe Korrekturfunktion (K) verwendet wird, insbesondere unabhängig von Pixelwerten dieser Pixel.

4. Verfahren nach einem der vorangehenden Ansprüche,
   wobei dann, wenn für eine Frequenz des Ausgangsbildes (32) keine Korrekturfunktion (K) und/oder kein Korrekturausdruck innerhalb der Korrekturfunktion vorliegt, eine verwendbare Korrekturfunktion (K) und/oder ein verwendbarer Korrekturausdruck aus wenigstens einer Korrekturfunktion (K) und/oder wenigstens einem Korrekturausdruck für eine andere Frequenz berechnet wird.

5. Verfahren nach einem der vorangehenden Ansprüche,
   wobei sich das Referenzbild (36) durch eine höhere Bildschärfe als das Fokusscanbild (32) auszeichnet.

6. Verfahren nach einem der vorangehenden Ansprüche,
   wobei als Objekt zum Ermitteln der Korrekturfunktion (K) eine Kalibrierstruktur (34) verwendet wird, die zumindest bereichsweise wenigstens 50 oder wenigstens 100 Linienpaare pro Millimeter aufweist.

7. Verfahren nach einem der vorangehenden Ansprüche,
   wobei das Referenzbild (36) mittels eines EDOF-Verfahrens, Enhanced Depth of Focus-Verfahrens, ermittelt wird oder durch Aufnahme einer Kalibrierstruktur (34) aus unterschiedlichen Blickrichtungen.

8. Verfahren nach einem der vorangehenden Ansprüche,
   wobei die Korrekturfunktion (K) für eine spezifische Variation der Fokuseinstellung (D) bei Aufnahme des Ausgangsbilds (32) verwendbar ist.

9. Verfahren nach Anspruch 8,
   wobei dann, wenn zur Korrektur des Ausgangsbildes (32) keine verwendbare Korrekturfunktion (K) vorliegt, eine verwendbare Korrekturfunktion (K) auf Basis wenigstens einer vorliegenden Korrekturfunktion (K) berechnet wird.

10. Verfahren nach einem der vorangehenden Ansprüche,
    wobei die Korrekturfunktion (K) für eine spezifische Objektart von per Bilderfassung erfassten Objekten verwendbar ist.

**EP 3 859 658 B1**

11. Verwenden einer frequenzabhängigen Korrekturfunktion (K) für eine Mehrzahl unterschiedlicher Pixel (P) eines fouriertransformierten Ausgangsbildes (32), das ein Fokusscanbild ist, bei dem eine Fokuseinstellung einer Bilderfassungseinrichtung (12) während der Bildaufnahme variiert wird,
**dadurch gekennzeichnet, dass**

die Korrekturfunktion (K) auf Basis eines Vergleichs eines Referenzbilds (36) eines Objekts und eines Fokusscanbildes desselben Objekts ermittelt wird,
wobei im Rahmen des Vergleichs das frequenzabhängige Amplitudenverhältnis des fouriertransformierten Referenzbilds (36) und des fouriertransformierten Fokusscanbilds (32) ermittelt wird.

12. Verwenden einer frequenzabhängigen Korrekturfunktion (K) nach Anspruch 11, wobei mit der Korrekturfunktion (K) eine frequenzabhängige Amplitudenkorrektur des Ausgangsbildes (32) durchführbar ist.

13. Bilderfassungsanordnung (10), insbesondere zur Objektvermessung,

mit:

- einer Bilderfassungseinrichtung (12), die dazu eingerichtet ist, wenigstens ein Ausgangsbild (32) unter einer Variation einer Fokuseinstellung (D) der Bilderfassungseinrichtung (12) während der Bildaufnahme aufzunehmen; und einer Computereinrichtung (26), die dazu eingerichtet ist, eine Fouriertransformation des Ausgangsbildes (32) durchzuführen;

wobei

- die Computereinrichtung (26) ferner eingerichtet ist, ein korrigiertes Bild (38) mittels einer frequenzabhängigen Korrekturfunktion (K) zu erzeugen, die auf die Fouriertransformierte des Ausgangsbildes (32) angewendet wird,
**dadurch gekennzeichnet, dass** die Computereinrichtung (26) ferner eingerichtet ist für eine Mehrzahl unterschiedlicher Pixel (P) des Ausgangsbildes (32) dieselbe Korrekturfunktion (K) zu verwenden, sowie die Korrekturfunktion (K) auf Basis eines Vergleichs eines Referenzbilds (36) eines Objekts (22) und eines Fokusscanbilds desselben Objekts zu ermitteln, wobei im Rahmen des Vergleichs das frequenzabhängige Amplitudenverhältnis des fouriertransformierten Referenzbilds (36) und des fouriertransformierten Fokusscanbilds (32) ermittelt wird.

14. Bilderfassungsanordnung (10) nach Anspruch 13,

wobei die Korrekturfunktion (K) für eine in Bildern erfasste Objektart verwendbar ist; und/oder
wobei die Korrekturfunktion (K) für die spezifische Fokuseinstellungsvariation bei Aufnahme des Ausgangsbilds (32) verwendbar ist.

15. Bilderfassungsanordnung (10) nach Anspruch 13 oder 14,
wobei das zum Ermitteln der Korrekturfunktion abgebildete Objekt dem mittels des Ausgangsbildes (32) erfassten Objekt (22) entspricht oder eine Kalibrierstruktur (34) ist oder ein zu dem mittels des Ausgangsbildes (32) erfassten Objekt (22) gleichartiges Objekt ist.

**Claims**

1. Method for image processing, in particular for object measurement, comprising:

- capturing a source image (32) of an object (22) using an image acquisition device, wherein the source image is a focus scanning image, in which a focus setting (D) of the image acquisition device is varied during image acquisition;
- performing a Fourier transformation of the source image (32);
- generating a corrected image (38) by means of a frequency-dependent correction function (K) applied to the Fourier transform of the source image (32),
**characterized in that** the correction function (K) is determined on the basis of a comparison of a reference image (36) of an object and a focus scanning image (32) of the same object,

wherein, in the process of the comparison, the frequency-dependent amplitude ratio of the Fourier-transformed reference image (36) and the Fourier-transformed focus scanning image (32) is determined.

2. Method according to Claim 1,
   wherein the object imaged for determining the correction function corresponds to the object (22) acquired by means of the source image (32) or is a calibration structure (34) or an object similar to the object (22) acquired by means of the source image (32).

3. Method according to Claim 1 or 2,

   wherein a frequency-dependent amplitude correction of the source image (32) can be performed by way of the correction function (K);
   and/or wherein the same correction function (K) is used for a plurality of different pixels of the source image (32), in particular independently of pixel values of these pixels.

4. Method according to any of the preceding claims, wherein, if there is no correction function (K) and/or no correction expression within the correction function for a frequency of the source image (32), a usable correction function (K) and/or a usable correction expression from at least one correction function (K) and/or at least one correction expression is calculated for a different frequency.

5. Method according to any of the preceding claims, wherein the reference image (36) is **characterized by** a higher image sharpness than the focus scanning image (32).

6. Method according to any of the preceding claims, wherein a calibration structure (34) which has in at least some areas at least 50 or at least 100 line pairs per millimetre is used as the object for determining the correction function (K).

7. Method according to any of the preceding claims, wherein the reference image (36) is determined by means of an EDOF method, Enhanced Depth of Focus method, or by capturing a calibration structure (34) from different viewing directions.

8. Method according to any of the preceding claims, wherein the correction function (K) can be used for a specific variation of the focus setting (D) when the source image (32) is captured.

9. Method according to Claim 8,
   wherein, if there is no usable correction function (K) for the correction of the source image (32), a usable correction function (K) is calculated on the basis of at least one present correction function (K).

10. Method according to any of the preceding claims, wherein the correction function (K) can be used for a specific type of object acquired by image acquisition.

11. Use of a frequency-dependent correction function (K) for a plurality of different pixels (P) of a Fourier-transformed source image (32), which is a focus scanning image, in which a focus setting of an image acquisition device (12) is varied during image acquisition,
    **characterized in that**

    the correction function (K) is determined on the basis of a comparison of a reference image (36) of an object and a focus scanning image of the same object,
    wherein, in the process of the comparison, the frequency-dependent amplitude ratio of the Fourier-transformed reference image (36) and the Fourier-transformed focus scanning image (32) is determined.

12. Use of a frequency-dependent correction function (K) according to Claim 11,
    wherein a frequency-dependent amplitude correction of the source image (32) can be performed by way of the correction function (K).

13. Image acquisition arrangement (10), in particular for object measurement, comprising:

    - an image acquisition device (12) designed to capture at least one source image (32) by varying a focus setting (D) of the image acquisition device (12) during image acquisition; and a computer device (26) designed to perform a Fourier transformation of the source image (32);

wherein

- the computer device (26) is also designed to produce a corrected image (38) by means of a frequency-dependent correction function (K) applied to the Fourier transform of the source image (32),

**characterized in that** the computer device (26) is also designed to use the same correction function (K) for a plurality of different pixels (P) of the source image (32), and to determine the correction function (K) on the basis of a comparison of a reference image (36) of an object (22) and a focus scanning image of the same object, wherein, in the process of the comparison, the frequency-dependent amplitude ratio of the Fourier-transformed reference image (36) and the Fourier-transformed focus scanning image (32) is determined.

**14.** Image acquisition arrangement (10) according to Claim 13,

wherein the correction function (K) can be used for an object type captured in images; and/or
wherein the correction function (K) can be used for the specific focus setting variation when the source image (32) is captured.

**15.** Image acquisition arrangement (10) according to Claim 13 or 14,
wherein the object imaged for determining the correction function corresponds to the object (22) acquired by means of the source image (32) or is a calibration structure (34) or an object similar to the object (22) acquired by means of the source image (32).

## Revendications

**1.** Procédé de traitement d'images, notamment pour la mesure d'objets, comprenant :

- prise de vue d'une image initiale (32) d'un objet (22) avec un dispositif de capture d'images, l'image initiale étant une image à balayage de mise au point avec laquelle un réglage de mise au point (D) du dispositif de capture d'images est modifié pendant la prise de vue ;
- réalisation d'une transformée de Fourier de l'image initiale (32) ;
- génération d'une image corrigée (38) au moyen d'une fonction de correction (K) dépendante de la fréquence qui est appliquée à l'image initiale (32) ayant été soumise à une transformée de Fourier,
**caractérisé en ce que** la fonction de correction (K) est déterminée sur la base d'une comparaison entre une image de référence (36) d'un objet et une image à balayage de mise au point (32) du même objet,
le rapport d'amplitude dépendant de la fréquence de l'image de référence (36) ayant été soumise à une transformée de Fourier et de l'image à balayage de mise au point (32) ayant été soumise à une transformée de Fourier étant déterminé dans le cadre de la comparaison.

**2.** Procédé selon la revendication 1,
l'objet représenté en vue de déterminer la fonction de correction correspondant à l'objet (22) détecté au moyen de l'image initiale (32) ou étant une structure d'étalonnage (34) ou un objet similaire à l'objet (22) détecté au moyen de l'image initiale (32).

**3.** Procédé selon la revendication 1 ou 2,

la fonction de correction (K) permettant d'effectuer une correction d'amplitude dépendante de la fréquence de l'image initiale (32) ;
et/ou la même fonction de correction (K) étant utilisée pour une pluralité de pixels différents de l'image initiale (32), en particulier indépendamment des valeurs de pixels de ces pixels.

**4.** Procédé selon l'une des revendications précédentes, lorsqu'il n'existe aucune fonction de correction (K) et/ou aucune expression de correction au sein de la fonction de correction pour une fréquence de l'image initiale (32), une fonction de correction (K) utilisable et/ou une expression de correction utilisable étant alors calculée à partir d'au moins une fonction de correction (K) et/ou d'au moins une expression de correction pour une autre fréquence.

**5.** Procédé selon l'une des revendications précédentes, l'image de référence (36) **se caractérisant par** une netteté supérieure à celle de l'image à balayage de mise au point (32).

**6.** Procédé selon l'une des revendications précédentes, une structure d'étalonnage (34) étant utilisée comme objet pour déterminer la fonction de correction (K), laquelle présente, au moins par endroits, au moins 50 ou au moins 100 paires de lignes par millimètre.

**7.** Procédé selon l'une des revendications précédentes, l'image de référence (36) étant déterminée au moyen d'un procédé EDOF (Enhanced Depth of Focus - Profondeur de champ améliorée) ou par enregistrement d'une structure d'étalonnage (34) sous différentes directions de vue.

**8.** Procédé selon l'une des revendications précédentes, la fonction de correction (K) pouvant être utilisée pour une variation spécifique du réglage de la mise au point (D) lors de la prise de vue de l'image initiale (32).

**9.** Procédé selon la revendication 8,
si aucune fonction de correction (K) utilisable n'est disponible pour la correction de l'image initiale (32), une fonction de correction (K) utilisable étant alors calculée sur la base d'au moins une fonction de correction (K) disponible.

**10.** Procédé selon l'une des revendications précédentes, la fonction de correction (K) pouvant être utilisée pour un type spécifique d'objets enregistrés par capture d'images.

**11.** Utilisation d'une fonction de correction (K) dépendante de la fréquence pour une pluralité de pixels différents (P) d'une image initiale (32) ayant été soumise à une transformée de Fourier, qui est une image à balayage de mise au point avec laquelle un réglage de la mise au point d'un dispositif de capture d'image (12) est modifié pendant la prise de vue, **caractérisée en ce que**

la fonction de correction (K) est déterminée sur la base d'une comparaison entre une image de référence (36) d'un objet et une image à balayage de mise au point du même objet,
le rapport d'amplitude dépendant de la fréquence de l'image de référence (36) ayant été soumise à une transformée de Fourier et de l'image à balayage de mise au point (32) ayant été soumise à une transformée de Fourier étant déterminé dans le cadre de la comparaison.

**12.** Utilisation d'une fonction de correction (K) dépendante de la fréquence selon la revendication 11,
la fonction de correction (K) permettant d'effectuer une correction d'amplitude dépendante de la fréquence de l'image initiale (32).

**13.** Arrangement de capture d'images (10), notamment pour la mesure d'objets, comprenant :

- un dispositif de capture d'images (12) qui est conçu pour enregistrer au moins une image initiale (32) en faisant varier le réglage de mise au point (D) du dispositif de capture d'images (12) pendant la prise de vue ; et un dispositif informatique (26) qui est conçu pour effectuer une transformation de Fourier de l'image initiale (32) ;
- le dispositif informatique (26) étant en outre conçu pour générer une image corrigée (38) au moyen d'une fonction de correction (K) dépendante de la fréquence qui est appliquée à l'image initiale (32) ayant été soumise à une transformée de Fourier,

**caractérisé en ce que** le dispositif informatique (26) est en outre conçu pour utiliser la même fonction de correction (K) pour une pluralité de pixels différents (P) de l'image initiale (32) ainsi que pour déterminer la fonction de correction (K) sur la base d'une comparaison entre une image de référence (36) d'un objet (22) et une image à balayage de mise au point du même objet, le rapport d'amplitude dépendant de la fréquence de l'image de référence (36) ayant été soumise à une transformée de Fourier et de l'image à balayage de mise au point (32) ayant été soumise à une transformée de Fourier étant déterminé dans le cadre de la comparaison.

**14.** Arrangement de capture d'images (10) selon la revendication 13,

la fonction de correction (K) pouvant être utilisée pour un type d'objet capturé dans des images ; et/ou
la fonction de correction (K) pouvant être utilisée pour la variation spécifique du réglage de la mise au point lors de la prise de vue de l'image initiale (32).

**15.** Arrangement de capture d'images (10) selon la revendication 13 ou 14,
l'objet représenté en vue de déterminer la fonction de correction correspondant à l'objet (22) détecté au moyen de l'image initiale (32) ou étant une structure d'étalonnage (34) ou un objet similaire à l'objet (22) détecté au moyen de l'image initiale (32).

Fig.2

Fig.1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **LU et al.** Imaging properties of extended depth of field microscopy through single-shot focus scanning. *OPTICS EXPRESS*, 20 April 2015, 10731

- **GUOAN ZHENG et al.** Wide-field, high-resolution Fourier ptychographic microscopy. *Nature Photonics*, 28 July 2013, vol. 7 (9), ISSN 1749-4884, 739-745, 3-4